Europäisches Patentamt

European Patent Office

Office européen des brevets

(11) Publication number: **0 429 778 A2**

## EUROPEAN PATENT APPLICATION

(21) Application number: 90117101.7

(51) Int. Cl.5: **G06F 15/62**

(22) Date of filing: 05.09.90

(30) Priority: 27.11.89 US 441719

(43) Date of publication of application:
**05.06.91 Bulletin 91/23**

(84) Designated Contracting States:
**AT BE CH DE DK ES FR GB GR IT LI LU NL SE
Bulletin 00/5**

(71) Applicant: **ANALOGIC CORPORATION
8 Centennial Drive, Centennial Industrial**
Park
Peabody, Massachusetts 01960(US)

(72) Inventor: **Neumann, Leopold
9 Woodpark Circle
Lexington, Massachusetts 02173(US)**

(74) Representative: **Feldkamp, Rainer, Dipl.-Ing. et al
Kaufingerstrasse 8
W-8000 München 2(DE)**

(54) **System and method of collecting and transmitting pictorial information.**

(57) A process of and systems for coding pictorial information contained in an image or a series of images of a moving scene. The pictorial information of said image is sensed from each of a plurality of different perspective views of said image so as to generate data representative of the pictorial information so that the data can be subsequently processed and used to back project the pictorial information so as to substantially reconstruct the image. A system for processing a standard TV format image to code it and then restore it is also presented. In addition a camera which directly generates a processed perspective view data set is described. Also a system for directly back projecting a series of perspective view data sets is described.

Fig. 5

The present invention relates generally to a system for and process of collecting and transmitting pictorial information, and specifically to a system for and method of generating and processing coded data representative of pictorial information of a moving image for subsequent transmission through a bandwidth limited channel and/or storage in a data storage system of limited capacity, and subsequently decoding the coded information for purposes of display.

With the tremendous increase in communications, great attention is being given to various techniques of how moving images can be generated and coded in a form so that they can be transmitted through bandwidth limited channels. This is particularly important in video conferencing (wherein pictorial information is transmitted in substantially real time) and in low cost picturephone applications.

Various methods have been developed of coding the pictorial information and further compressing the coded information so that the information can be transmitted or stored. Of importance is that whatever approach is adapted there is an ever increasing desire to be able to acquire and transmit and/or record a usable image at the lowest cost.

It is a general object of the present invention to provide an improved system for and method of acquiring and processing of the pictorial information of a moving image in such a manner that it can easily be transmitted as a sparse data set through a bandwidth limited transmission medium, and/or stored in a storage device of limited storage capacity.

Another object of the present invention is to provide an improved low cost system for and method of acquiring such information in a form requiring minimum processing, and back projecting such information after it has been coded in a form requiring minimum processing.

Thus, another object of the present invention is to provide a novel camera system for forming and coding the pictorial information of an image from each of a plurality of different perspective views and of direct back projection on a novel cathode ray tube (CRT).

These and other objects of the present invention are achieved by an apparatus for and method of coding pictorial information contained in an image. The method comprises the step of generating data representative of the pictorial information of the image from each of a plurality of different perspective views of the image so that the data can be subsequently processed and used to back project the pictorial information so as to substantially recreate the image.

The apparatus comprises means for generating data representative of the pictorial information of the image from each of a plurality of different perspective views of the image, and means for subsequently processing the data and using the processed data to back project the pictorial information so as to substantially reconstruct the image.

Other objects of the present invention will in part be obvious and will in part appear hereinafter. The invention accordingly comprises the processes involving the several steps and the relation and order of one or more of such steps with respect to each of the others, and the apparatus possessing the construction, combination of elements, and arrangement of parts exemplified in the following detailed disclosure and the scope of the application all of which will be indicated in the claims.

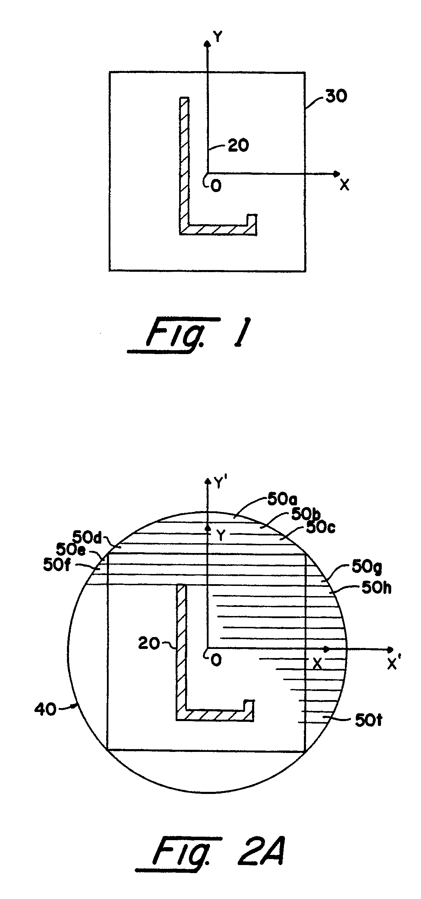

For a fuller understanding of the nature and objects of the present invention, reference should be had to the following detailed description taken in connection with the accompanying drawings wherein: Fig. 1 illustrates an example of an image containing pictorial information to be coded, and subsequently recreated in accordance with the present invention;

Figs. 2A-2C illustrate the technique of coding image information contained in the example provided in Fig. 1 in accordance with the present invention;

Fig. 3 illustrates a back projected image from the coded image of Fig. 1;

Fig. 4 is an illustration of part of the orientation of the bands relative to the image, for purposes of facilitating an understanding of both the interpolation and locating process for back projecting the image;

Fig. 5 is a block diagram of one embodiment of an apparatus for coding the image information, and subsequently processing the coded image data and back projecting the processed data to recreate the image;

Figs. 6A-6D illustrate a more detailed embodiment of the block diagram shown in Fig. 5;

Fig. 7 is a cross-sectional, longitudinal view of a novel camera for coding pictorial information in accordance with the present invention; and

Fig. 8 is a front perspective view of the optical data collector of the camera of Fig. 7;

Fig. 9 is a schematic diagram of the detectors of the data collector of Fig. 8, further provided with a convolver; and

Fig. 10 is a cross-sectional view, partially shown in block form, of an embodiment of a display device for displaying a reconstructed image coded, processed and back projected in accordance with the present invention.

Referring to Fig. 1, an original image 20 of an object is shown disposed in an image field 30, which in turn is defined by an X-Y coordinate system. As shown, the image is analog in nature, although the original image can be in a digital form by creating the image with individual pixel elements, each of which represents a relative intensity value. The image field 30 defines the entire area within which the image can be formed, as well as an outer boundary of the image. The X-Y coordinate system preferably is defined with the origin 0 of the X-Y axes at the center of the image.

In accordance with the present invention the image information is coded into data representative of the pictorial information of the image. Preferably, the data is representative of the integrated or summed values of the relative intensities of the portions of the image within each of a plurality of contiguous bands or rows defined by the coding technique, from a plurality of perspective views of the image, so that the data can be subsequently processed, and used to back project the pictorial information so as to substantially recreate the image. In accordance with the preferred technique of coding the data, the image is processed from each of a plurality of different perspective views of the image, with data being derived from the pictorial information at each view in substantially the same manner.

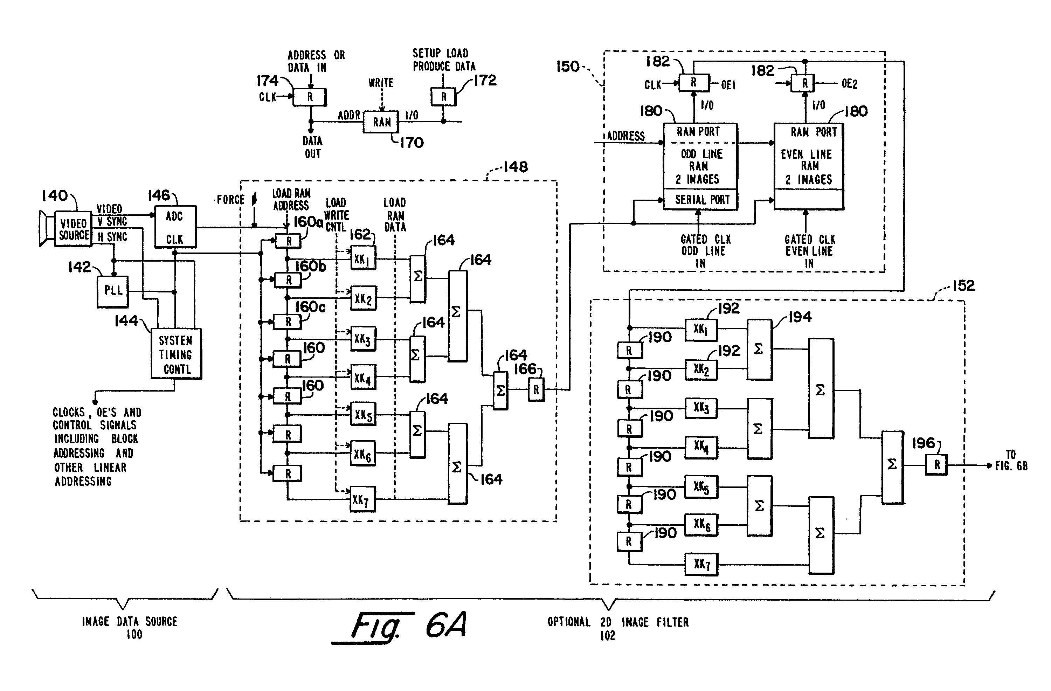

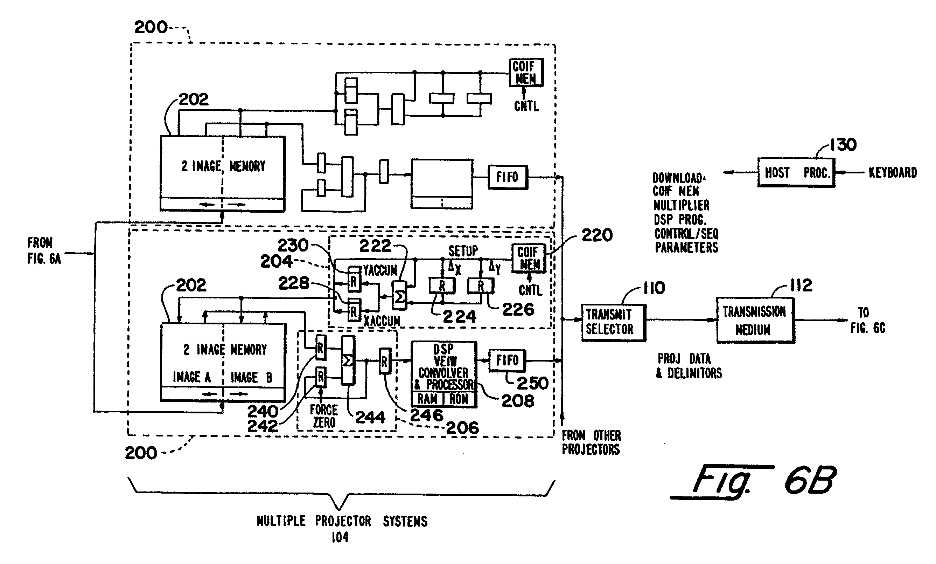

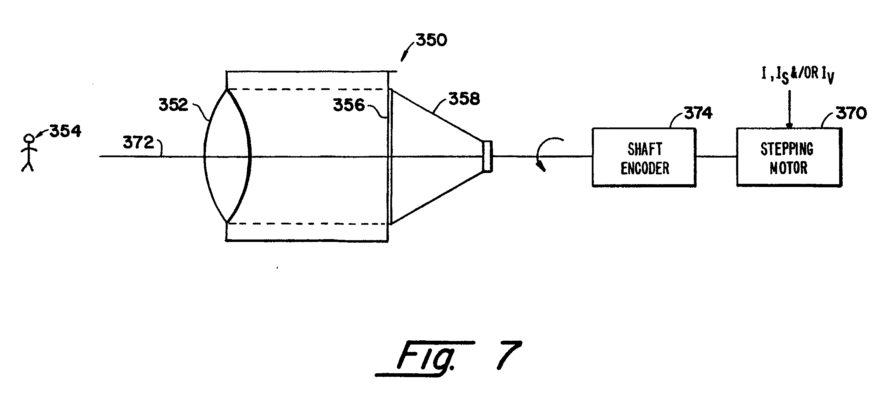

More specifically, referring to Figs. 2A-2C, the image 2O is viewed within a projection field 40. Figs. 2A-2C, which show only three of a plurality of the perspective views used to code the pictorial information of the image 20, are provided to facilitate an understanding of the present invention. The perspective views of the image are preferably created by "projecting" the image onto the projection field 40 and rotating the projection field 40 relative to the image field 30 to different relative angular positions so as to create the respective, perspective views. As will be apparent hereinafter, the image can be rotated electronically as seen in the embodiment described in Figs. 6A-6D, or opto-mechanically as seen in the embodiment described in Figs. 7-9. As will be evident hereinafter, the projection field is circular. In this regard all of the relevant pictorial information must appear within the circular projection field. Accordingly, the entire image field 30, or at least the relevant portion of the image field, is contained within the projection field 40 as shown in Figs. 2A-2C.

As described hereinafter, the projected view of the image in the projection field has its own Cartesian coordinate system, defined hereinafter as the projection or X'-Y' coordinate system. The image is projected onto the projection field so that the origin of the X'-Y' coordinate system coincides with the origin O of the X-Y coordinate system. The relative rotation of the projection and image fields occur about the origin O. For purposes of illustration the X'-Y' coordinate system is shown as including a plurality of contiguous rows or bands 50 of uniform width within the x'-Y', coordinate system and superimposed onto the image field so that the bands rotate with the projection field relative to the image field. The rows respectively define bands of pictorial information about the image. The number and width of the bands formed by the rows 50, is dependent upon the resolution and capacity of the system employed to carry out the method as will be more evident hereinafter, and in particular the resolution of the image recreated from the coded information following the coding of the information, as will be described hereinafter. Where, for example, the recreated image is formed using a 512 row by 512 column pixel matrix, the number of rows used in the projection field is at least 512, although Figs. 2A-2C show fewer rows in order to facilitate an explanation of the present invention.

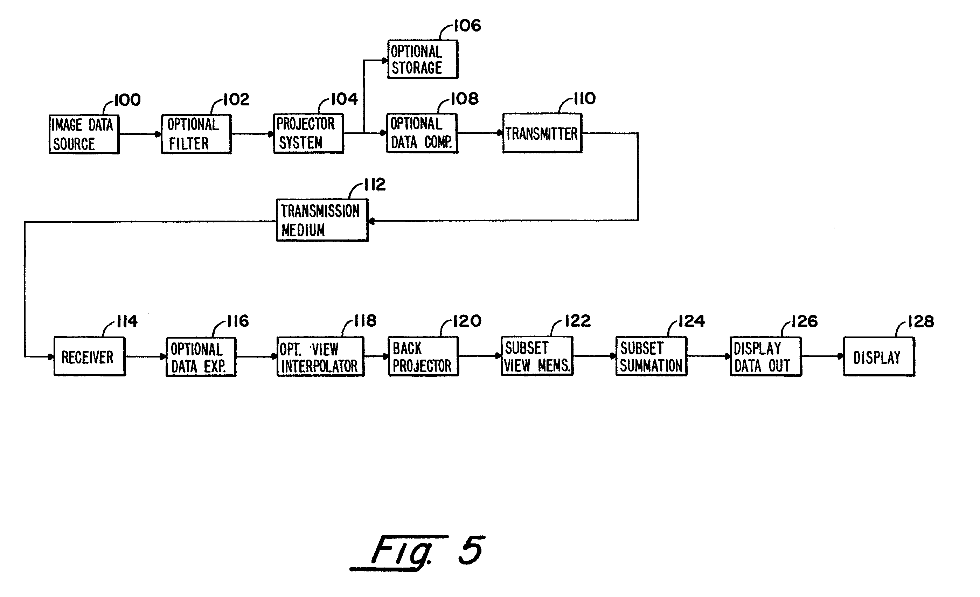

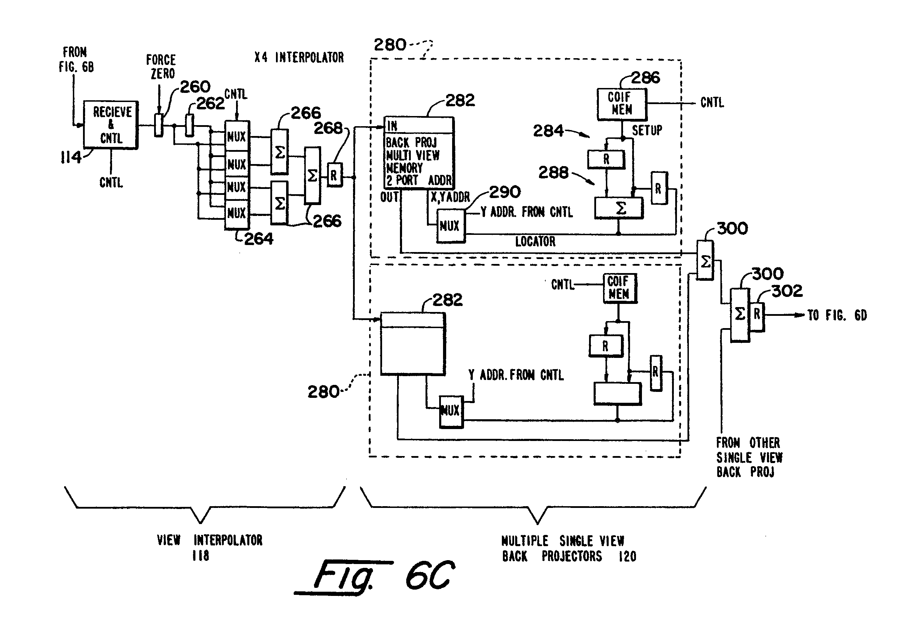

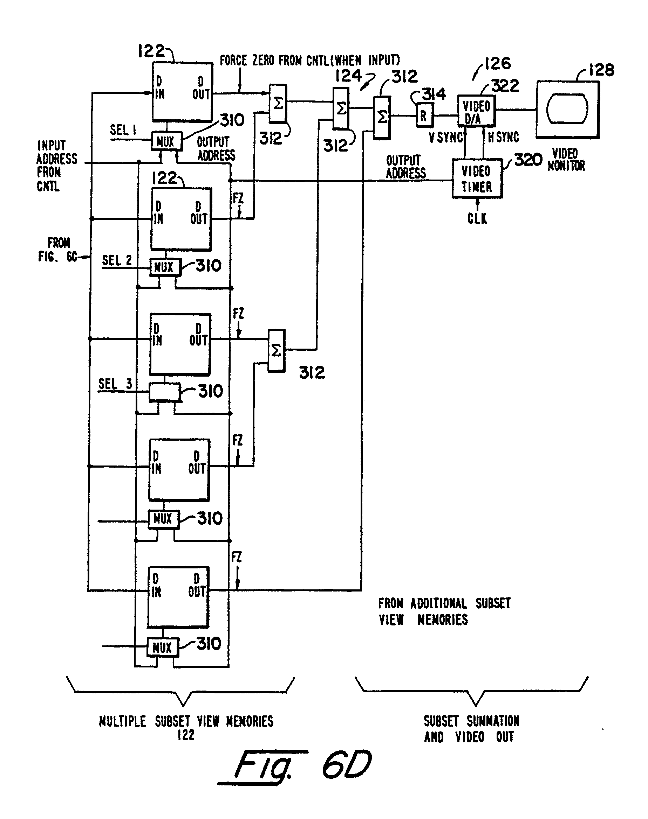

Certain pictorial information is generated at each perspective view. In the preferred method the pictorial information is obtained by integrating or summing the relative intensity values of the image contained in each row in the projection field depending on how the intensity values of each row are processed. Thus, in Fig. 2A, the summed or integrated values of the first four rows 50a-50d would each be zero since none of these rows would contain any pictorial information. While rows 50e-50g each contain pictorial information, as shown, the relative intensity is zero throughout each row since no pictorial information is shown in those rows. At least a portion of row 50h does contain pictorial information with intensity values greater than zero. If the data representing each row is presented in analog form (as will be the case in the embodiment shown in Figs. 7-9) the data can be integrated or summed into an optical detector. If the data is first digitized (as will be the case in the embodiment shown in Figs. 5 and 6) then the data representing each row can be summed electronically. Thus, each row 5O can be represented by a number representing the summed relative intensity values of the pictorial information contained in the row. The values from the summing step for the first perspective view can be stored or transmitted depending upon the application to which the coding technique is applied.

The relative intensity scale utilized will depend upon the intensity scale of the image to be coded, as well as the resolution and capacity of the system utilized to carry out the method of the present invention. The intensity scale can be, for example, a gray scale when the image is a black and white image, or the relative brightness of a particular color (and can for example, be used to transmit or store color images). These intensity values are stored for later use in recreating the image 20. Where the pictorial information is a function of color, filters can be used for acquiring the correct information from the image. For example, where it is desired to transmit or store a color image, the coding step for each perspective view can be repeated with three filters of the three respective primary or complementary colors used to represent the true color information of the image. Alternatively, additional data representative of luminosity of the image, and a pair of two color difference images (representing the hue) for each band for each view can be subsequently used to reconstruct the original image 20 in true color. See Pritchard, D.H.; "US Color Television Fundamentals--A Review"; IEEE Trans. Consum. Electron.; Vol. CE-23; pp. 467-478; Nov. 1977.

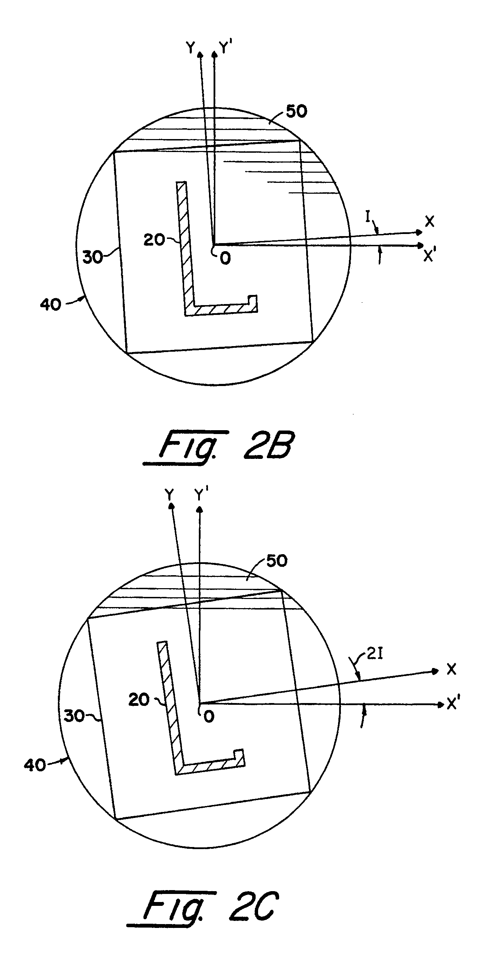

After summing the intensity values for each row in the X'-Y' coordinate system of the projection field in the first perspective view the projection field is rotated to the next perspective view, which as illustrated in Fig. 2B, by rotating the projection field about the origin O relative to the X-Y coordinate system of the image field by a predetermined amount, indicated as the "relative view" angle. As shown the bands defined by the rows of the projection field are rotated relative to the image so that when the intensity values are summed for each row, the values will be different for at least those rows containing relative intensity values different from zero. Again the values can be stored for later use in recreating the image. After summing the intensity values from the

perspective view shown in Fig. 2B, the projection field is again rotated about the origin O by the angle I as indicated in Fig. 2C, so that the X'-Y' coordinate system of the projection field, together with the bands 50, are now rotated relative to the X-Y coordinate system of the image field by an angle of I from the position shown in Fig. 2B and 2I from the position shown in Fig. 2C. Again the intensity values for each row 50 of the of the X'-Y' coordinate system are summed, and can be stored. The process is repeated at least for one-half of a complete revolution of the projection field relative to the image field.

What happens next depends upon the nature of the use of the process of the present invention. In a case where the image is a still image and the coded information is being stored or is being recreated without a concern with time, the value of I can be relatively small, e.g., $1°$, and all of the information obtained from each of the 180 angular positions from a single $180°$ half rotation may be sufficient to acquire the necessary coded information for subsequently recreating the image 20. It should be appreciated that only a $180°$ half rotation is necessary to acquire all of the information since rotation through the second $180°$ would merely result in a duplication of the information acquired during the first half rotation. Thus, the data for the entire view is acquired by rotating the bands about the image in angular steps of $180°/n$, wherein n is a whole integer.

On the other hand, where the information is used for real time processing and subsequent reproduction, as may occur, for example, when transmitting images for video conferencing where the image may change over time, it is necessary to provide a continual process of coding the image information. In one approach it may be desirable to transmit the information representative of the image in sequential "frames", each frame comprising a plurality of predefined "subsets" of perspective view data, wherein each of the predefined subsets of a frame are respectively representative of a different subset of perspective views of the image. By creating subsets of perspective view data, and subsequently back projecting the coded data by subset, the image can be initially recreated faster (although at least initially of poorer resolution) for quicker image recognition. The initial reconstructed image created by the first subset will be subsequently filled in with the use of each subsequent subset of data of the first frame, each time improving the resolution until all the subsets of data of the frame are generated. The reconstructed image will continue at the greater resolution by updating each subset of data with new information of the corresponding perspective view data subset of the next frame as it is generated. The subsets of perspective views are angularly offset from each other by a predefined angle so that none of the subsets of views are repeated within a frame until all of the subsets of coded data representative of the pictorial information have been acquired from the corresponding subset of views of the frame.

For example, a subset of data can be generated by rotating the projection field through "r" perspective views, each equiangularly spaced from one another by the angle I for a half revolution, wherein r is a whole number and I is chosen so that $rI = 180°$. Thus, for example, where each subset has 8 different perspective views, and I therefore equals $22.5°$, a subset of views can be generated by rotating the projection field in $22.5°$ increments for a complete half-revolution. Because the data is being used in real time, the next subset of data can be generated during the next half revolution, although the relative angular positions of the projection and image fields must be changed by a predetermined offset so as generate data from a different set of perspective views.

The offset angle $I_s$ is determined by the following relationship:

$$(1) \quad I_s = (i)(180°)/(s)(r)$$

wherein $I_s$ = the offset angle between each subset;

r = the number of perspective views per subset;

s = the total number of subsets in a frame; and

i = a whole integer chosen to be the lowest number which has no common factor with s except one.

Preferably, although not necessarily, each frame should begin at the 0° or 180° boundary and the value of $I_s$ should be chosen so that adjacent subsets are substantially different, e.g., between about one-quarter and three-quarters of 180°/r. In this regard, therefore, i is preferably equal to n multiplied by r, where n is a whole integer chosen so that the 0°, 180° boundary condition is met. Thus, if r = 8 views per subset (22.5° apart), and s is chosen to be 15 so that a total of 120 views per frame are generated, i can equal 2 and $I_s$ will equal 3° However, with $I_s$ equal to 3°, after the 15 subsets of data have been acquired the projection field will start the next subset of data at a 45° angle which is a view present in the first subset of views, confirming that the total number of subsets will then be repeated. In order to provide the 0°, 180° boundary condition, therefore, n =180°/45° = 4so that i should equal 8. With $I_s$ = 3°, after the 15 subsets of data have been acquired the projection field will start the next subset of data at the 180° boundary as desired. Further, with $I_s$ = 3°, $I_s$ will be one-half the value of 180°/r as preferred.

Alternatively, the angular increment for each rotation for each perspective view, indicated as I in Figs. 2B and 2C, can be chosen without the necessity of introducing offsets during the coding of information in each frame, so that the process will proceed through all of the views of a frame before repeating the views for the next frame, enabling a continuous process to be utilized. In this regard the following relationship is preserved:

$$(2) \qquad I_v = 180r/n;$$

wherein $I_v$ = the angular increment between each view;

n = the total number of perspective views per frame before repeating the views; and

r = a whole integer representing the total number of 360° rotations of the projection field relative to the image field per frame and chosen to have no common factor with n, except one.

The choice of r is a tradeoff between the time it takes to accumulate data from each revolution and the resolution provided by the data of each revolution. As an example, n = 120 views, and the views are generated with r = 19 revolutions of the projection field relative to the image field, then $I_v$ = 28.5°. In another example, n = 120 views which are generated with r = 11 revolutions of the projection field relative to the image field. Then $I_v$ = 16.5°.

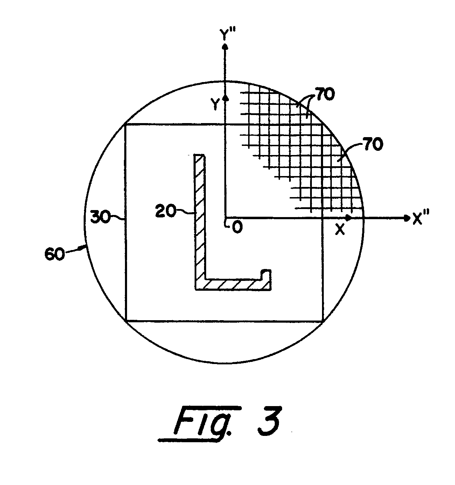

The pictorial information contained in the coded data can then be used to recreate the original image 20. The recreated image, shown in Fig. 3, is preferably formed by processing the data obtained during the coding of the pictorial information through a data processor, and then displaying the pictorial information provided in the data on an image forming system, such as a matrix of pixel elements 70, each of uniform intensity so as to form the back projection field 60. The pixel elements 70 are arranged in a matrix of rows and columns with an X"-Y" coordinate system which preferably coincides with the X-Y coordinate system of the image field so as to provide the correct orientation of the recreated image to the viewer. The number of rows and columns of pixel elements are a function of the ultimate desired resolution of the recreated image, with the number of each being preferably equal to at least the number of rows or bands 50 defined in the projection field and used in the coding process. An example is a 512 by 512 matrix, where the number of rows 50 is 512.

Recreating the image is preferably accomplished by using the coded data acquired in the coding process to "back project" the image in a similar manner as used in parallel beam co-axial tomography. More specifically, the data first must be convolved with a deblurring kernel and then transformed from the X'-Y' coordinate system of the projection field so that it is properly oriented with respect to the x"-Y" coordinate system of the final image field defined by the pixels 70. Once convolved and transformed the data can then be used to recreate the image using the pixels 70.

More specifically, the data must first be convolved with a kernel in a well known manner so that the final recreated image is deblurred.

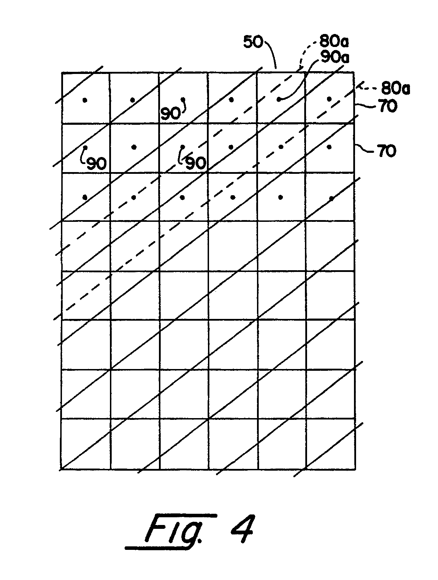

Once convolved, the convolved data can be used, although it is not necessary, to generate interpolated data for improving the accuracy of the back projection. The reason for and the use of interpolated data to reconstruct an image in divergent beam coaxial tomography is described in U.S. Patent No. 4,135,247 issued on January 16, 1979 to Bernard Gordon, John Dobbs and myself (hereinafter "the '247 Patent"), and for the same reason interpolated data can be used to provide a more accurate reproduction of the original image 20. More specifically, as described above the bands 50 are rotated relative to the image during the coding process. If the image is considered to be comprised of pixels 70, each of uniform density and having a pixel center 90, the center line 80 of each row 50 for each perspective view, as suggested in Fig. 4, may not intersect the centers 90 of the pixels 70, before the transformation is made so that when reconstructing the image by back projection as described hereinafter, the reconstruction of the image will contain inaccuracies. Since the centerlines 80 of she bands 50 are all parallel and an summed value of the intensities in each band has been acquired, it is fairly easy to interpolate the integrated value of the intensities passing though a particular pixel center within a particular perspective view by using the two closest center lines on opposite sides of the pixel center in question as, for example, illustrated by the relative distances between pixel center 90a and center line 80a.

The convolved data, and if interpolated the appropriate interpolated data, are then processed so that the image is recreated using the pixel elements 70 as illustrated in Fig. 3. In performing the recreation of the image 20 at least two functions must be carried out. First, the proper convolved data, and interpolated data if provided, must be associated with the appropriate pixels used to provide the reconstructed image, a process known as "locating" the proper data point, i.e., the addresses of each location in the arrangement of pixels 70 for the data acquired for each perspective view. After these determinations are made, the data is used to update previously accumulated data at that location in the pixel matrix. The data is updated in any one of several ways depending, in part, on the particular application of the present invention.

More specifically, if the reconstructed image is considered to comprise a matrix of pixel elements of uniform intensity such as shown at 70 is Fig. 4, each pixel will be assigned the summed value of the band 50 within which the pixel is disposed for each perspective view. However, this initial premise assumes that each pixel will lie totally with a single band for each view. Accordingly, the locating process is used to provide an appropriate set of rules on how each pixel is assigned values acquired from the coded data of the bands 50 for each view.

In particular, when coding the image, each band 50 for each perspective view is represented by a number representative of the intensity values in that band for that view. Referring to Fig. 4, the locating process is accomplished according to the following relationships. If the projection field of the X'-Y' coordinate system is superimposed onto the pixel matrix of the X"-Y" coordinate system of the back projection field for each perspective view, each of the bands 50 will each pass through selected pixels 70 taking into account the relative angle between the two. Each pixel therefore will be identified to receive the summed value for the band passing through it for that view. In this regard, in the absence of interpolated data, where two adjacent bands 50 are superimposed on a pixel 70 for that view as illustrated in Fig. 4, the band sharing a greater portion of the pixel (i.e., the band containing the pixel center 90) may be assigned that value, or where both bands share the pixel equally (i.e., the pixel center lies on the line between adjacent bands) the pixel may be arbitrarily assigned the value of one of the bands. If interpolated data is used, then the interpolated value used is based on the values of the two bands and the proportional amount that both share with a pixel.

Various methods of using the data for each pixel element 70 to recreate the image can be employed. The particular method depends, in part, on the application of the process of the present invention. For example, when the image is a still image, the coded information is recreated without a concern with time, and the value of I is relatively small, e.g., 1°, with all of the information obtained from 180 angular positions from a single 180° half rotation, the image can be recreated by accumulating the data at each pixel location used to recreate the image for each of the 180 views. Once the data for all 180 views is completely located and assigned to each pixel, the image will be recreated.

On the other hand, where the image data is being transmitted in subsets, in real time, representing image frames, the data can be transmitted and displayed is subsets until the first frame is displayed, with each subsequent subset of perspective data updating the corresponding subset of the previous frame. The data for one view or subset of a frame can be used to replace the data for the same view or subset of the previous frame, or the difference can be determined and the values accordingly updated. In some instances, as where the reconstructed image is viewed on a phosphor screen, the decay of the image will provide a natural way of replacing old pictorial information from a previous subset with new pictorial information of the same subset of the next frame, since the old pictorial information will fade as the new data is created on the phosphor screen. Further, where the back projection is performed view by view, the data can be modified for each of the subsets so that as the pictorial information of each of the views of each of the subsets is back projected the intensity of the pictorial information is adjusted so that the relative intensity of the reconstructed image remains substantially unchanged as the pictorial information is back projected.

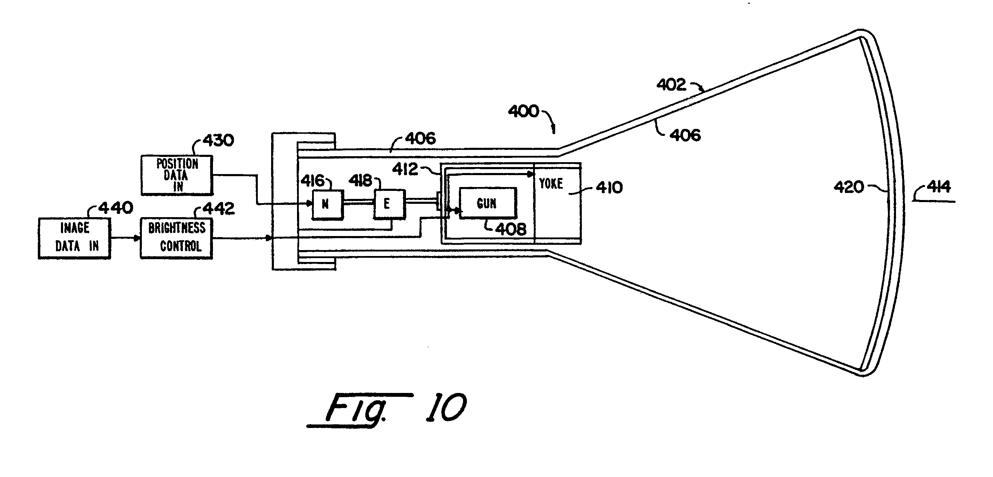

One system of the present invention for performing one embodiment of the method of the present invention is shown in Fig. 5. As shown a source 100 of image data provides the data for each perspective view. The source typically includes means for forming an image of an object, and means for acquiring the pictorial information of the image from the formed image. The source may provide the raw data of the image so that the data can be manipulated electronically to provide the additional data for each view of the relative view angle between the projection field and the image field as shown in Figs. 5 and 6. Alternatively, the data may be derived opto-mechanically as described in Figs. 7-9. Additionally, while the embodiment of Figs. 5 and 6 back projects the image entirely electronically before displaying the reconstructed image, a novel display can be provided for rotating the back projection field relative to the generated data provided from the image field electro-mechanically as shown in and described with respect to Fig. 10. The source 100 is connected to an optional filter 102 (when necessary) for smearing the image represented by the data slightly thus simplifying the sampling process. Filter 102 may be considered to be an anti-aliasing filter, when, for example, the image data source provides the data in digital form divided into discrete pixels.

The output of filter 102 is connected to the projection system 104, which in the embodiment of Figs. 6A-6D, includes means for rotating the image 20 about the origin O of the projection field 40, means for generating the values of the summed or integrated intensity values for the bands 50 for each perspective view, and means for convolving the data with a deblurring kernel. Once processed by the projection system the data can be stored in an optional storage 106, as for example, when using the system to generate video text information for later recreation. When such data in storage 106 is to be used to reconstruct the image, or when the data is immediately transmitted from the projector system 104 to an image reconstructor (as for example when using the system for video conferencing requiring real time transmission) the data can be compressed prior to transmission in a well known manner, as indicated at 108.

The transmitter 110 transmits the data through the transmission medium 112 to the receiver 114. If the data transmitted has been compressed, the receiver is connected to data expander 116 which operates to decode or decompress the compressed data. The decompressed data is applied to an optional view interpolator 118 which interpolates the data as previously described. The output of the interpolator 118 is connected to the input of the back projector 120 for back projecting the data to reconstruct the image as described above. Where the data is being transmitted in subsets, the system preferably includes at least the same number of individual memories 122 as there are subsets of data per frame. The output of the memories 122 are applied to means 124 for summing the subsets of data, which stores the values of the data of the subsets associated with each of the pixels of the final display.

Once provided in the summing means 124, the data can be read out of the summing means by the display data output 126 to the display 128.

Referring to Figs. 6A-6D, the embodiment of the system of the present invention shown includes a system host processor 130 shown in Fig. 6B. Processor 130 includes a microcomputer and keyboard for setting up parameters of the various elements hereinafter described such as coefficient values, loading firmware such as programs for the digital signal processor 208 (described hereinafter), as well as provide the control and sequencing signals for the operation of the system, all under the control of the system user.

Referring to Fig. 6A, the image data source 100 includes a standard video data acquisition system in the form of a video camera 140. The video camera is a standard camera having an objective lens for forming an image on an image plane and means for scanning the image in a predetermined number of horizontal lines from the top of the image plane to the bottom using a standard raster scan format. The camera provides a horizontal sync pulse signal to provide a reference of the beginning of each horizontal line of data, and a vertical sync pulse signal to provide a reference of the beginning of each scan frame. The horizontal sync output of the camera 140 is accordingly connected to the input of a standard phase lock loop clock 142, as well as an input of the controller 144 with the latter also receiving the vertical sync signal. The controller 144 provides the clocking, enable and control signals for that portion of the system used to provide coded signals to the storage 106 and/or transmitter 110. Where the entire image field is disposed within only a portion of the projection field, as is shown in Figs 2A-2C, the controller 144 may include a suitable set of pixel and line counters and comparators to control the subsequent processing of only the data contained within the image field, and exclude the information outside the image field but within the projection field.

The output of the converter 146 is applied to the input of a filter 102 so as to smear the image represented by the data and to remove undesirable high frequency noise. The filter 102 filters the image, in an optimum manner, prior to sampling. The filter is preferably a finite impulse-response (FIR) filter. The latter filter is a commonly used type of digital filter wherein digitized samples of the signal serve as inputs; each filtered output being computed from a weighted average of a finite number of previous inputs. Since the image data is two-dimensional, the filter is similarly two dimensional. Accordingly, the filter includes a horizontal filter 148, a "corner turning" memory 150, and a vertical filter 152. As shown in the drawing the FIR filter is a 7 X 7 filter so that the digital output signals of each of the horizontal and vertical filters 148 and 152 are each computed from a weighted average of seven previous inputs to the filters. It should be appreciated that the filters can be designed to provide a weighted average of any number of previous inputs depending upon the system design.

Described in greater detail, the horizontal filter 148 includes seven registers 160 connected in series for storing seven successive digital input values. Registers 160 are clocked from the phase lock loop clock 142 so that the registers are clocked at the same sampling rate as the ADC 146. As the output of the ADC provides a new digital value, it is clocked into the register 160a. The previous value in register 160a is clocked into register 160b, which in turn shifts its value to register 160c, etc. The current value in each register 160 is read into a corresponding multiplier 162, which in turn multiplies the signal by a weighting coefficient in a well known manner. The coefficients used in the multiplier 162 provide a filtering kernel that is compatible with the sampling. Each signal value provided at the input of the filter has a corresponding address. Since the camera 140 scans in horizontal rows, the data is presented by rows (so that the horizontal filter is used first). The coefficients for each address of the may be different so that as seen in Fig. 6A RAM 170, setup and loading register 172 and address and data register 174 are used to insure the proper coefficient are used with the data at the correct addresses. Specifically, the register 174 receives the setup and coefficient data from the host processor 130. As data is entered from the registers 160, the corresponding addresses are provided to the register 174. With each address the RAM 170 provides the appropriate coefficients to the multipliers 162 in a well known manner. The output of the multipliers 162 are added by the signal summers 164 so as to provide each weighted output to the register 166.

Each weighted output of the register 166 of the horizontal filter 148 is provided to the input of a corner turning memory 150. The latter includes two two-port random access memories (RAMs) 180, which alternately operate to receive data corresponding to the odd and even numbered lines of the camera scan and are capable of holding data corresponding to two views. Each row of data from the image corresponds to a row in one of the RAMs so that when all the data of a view is entered for one view, the data can be read out of the memories corresponding to their addresses in vertical columns (the "corner turning" feature), while the memories are receiving and storing data from the next view. The data for each column of a view stored in the RAMs 180 are sequentially read into the read out registers 182. The contents of registers 182 are alternately read into the vertical filter 152. The latter is identical to the filter 148 and includes seven registers 190 arranged in series, multipliers 192 for receiving each output of the registers 190 by a weighting coefficient, and the signal summers 194 for summing the outputs of the multipliers to provide the output digital signal to the register 196 as a weighted average of the previous seven input values. The multipliers 192 use a RAM, set up and loading register and data and address register similar to the ones shown at 170, 172 and 174. The output of the register 196 provides the output of the FIR filter 102.

Referring to Fig. 6B, the output of the filter 102 is applied to the input of the projector system 104. Preferably, the projector system includes a plurality of projectors 200 (two being shown in Fig. 6B) operating in parallel since the projectors may at one time all use the same image frame from camera 140, and each process various perspective views obtained from that frame. Thus, if, for example, the system is designed to process 8 views per subset, and 15 subsets per full image, eight projectors might be provided to provide the 8 views/subset simultaneously, and sequentially provide each subset. For real time processing, new data from camera 140 can be entered for each subset. The number of projectors 200 utilized will depend in part in the number of views chosen per subset (or per frame depending on the technique utilized for transmitting the images as described above). Each projector 200 includes an image memory 202, an address generator/control unit 204 and a pixel summer 206. Each projector also includes a digital signal processor (DSP) 208 used for convolving the projection values of each view with a deblurring kernel, and resampling the view if desired. In this regard it should be appreciated that the filtering operation provided by the horizontal and vertical filter 148 and 152 may be extended with the extension folded into the deblurring convolution by using a kernel that is derived by convoluting the filter kernel and the deblurring kernel. In the latter case the filtered convolved data may be resampled as desired (compatible with the filters 148 and 152 and the extension) to obtain the desired number of bands 50 (post convolution) per view.

As shown in Fig. 6B, all of the image memories 202 read and store the same data output of the filter 102. The image memory 202 of each projector 200 is a two port memory capable of storing data for two successive views so that when the data of one view is loaded into memory it can be read out, while the memory is reading in the data for the next view.

The address generator/control unit 204 includes a coefficient memory 220 for storing the starting point of a particular view, and a set of coefficients for each possible view. The coefficients are derived as a function of the sine and cosine values of each of the possible angles between the projection field and image field. The output of the memory 220 is applied to the delta X register 224, the delta Y register 226, and the signal summer 228. When the view provided in the projection field is in the same orientation as the image field the X-Y axes are coincident with the X'-Y' axes. The set up value and the coefficients provided will be those where the relative angle is zero. During the processing for the next view, the X'-Y' axes will be rotated by an angle I relative to the X-Y axes. The set up value will be zero from the previous view, while the change in X (delta X) and the change in Y (delta Y) each will be a function of sine I and cosine I. In a same manner the next view will have its initial set up value and the delta X and delta Y inputs to the registers 224 and 226 are a function of the difference between the sine 2I and sine I and the difference between the cosine 2I and cosine I. The X and Y accumulators formed by the registers 228 and 230 and the summer 222 thus provide the series of addresses of the pixels for each view and effectively rotate the image as seen from the projection field for each view. It should be appreciated that the address output of the unit 204 is alternately applied to read out the portion of the memory having received a complete set of data with the other portion of memory being addressed to receive data from the filter 102.

As the memory 202 is addressed by the address generator/control unit 204, the data at each address provided by the unit 204 is transmitted to the pixel summer 206. The latter is an accumulator comprising two registers 240 and 242 and the summer 244. The accumulator adds all of the pixel values provided in a band 50 (and weighted by filter 102), so that the output of the accumulator is representative of the summed values. The output of the accumulator is applied to the register 246 which in turn has its output applied to the DSP 208. The data is convolved by a deblurring kernel, filtered and resampled in a well known manner. The output of the DSP is applied to the a FIFO buffer register 250.

Where the image is not immediately transmitted, the data in the registers 250 can be read into memory (identified as 106 in Fig. 5, and not shown in Fig. 6B). Similarly, when transmitting the image data, the data can be compressed by a data compressor 108 (shown in Fig. 5, and not shown in Fig. 6B) in accordance with well known data compression techniques.

The system shown in Figs. 6A-6D is for real time processing. The data in the registers 250 are therefore sequentially transmitted by the transmitter 110, as shown in Fig. 6B through the transmitting medium 112 to the receiver 114, shown in Fig. 6C. The receiver provides the necessary control signals for operating the remaining portion of the system shown in Figs. 6C and 6D. Where the data was previous compressed prior to the transmission of the data, the data would be decompressed by a data expander 116 (shown in Fig. 5, but not shown in Fig. 6C). The data is serially provided from the receiver 114 to a register 260 of an interpolator 118. The register 260 has its output connected to a second register 262, as well as one input of each of a plurality of multiplexors 264. The output of the second register 262 is applied to the other input of each of the multiplexors 264. The registers 262 and 264 hold the value of two adjacent convolved data points of a perspective view. The number of multiplexors depend upon the type of interpolator. Four multiplexors are shown, which provides a "by four" interpolator. By controlling which inputs of the multiplexors are addressed, the interpolator will provide only one value of either register 260 or 262, one value of one register and three of the other, or two of each. By adding the output values of the multiplexors 264 by the signal summers 266, three additional, interpolated values will be provided for each actual convolved view point. Each output value of the summers 266 is entered into the register 268, whose output forms the output of the interpolator, the output of the register being applied to the input of back projector 120.

The back projector 120 preferably includes a plurality of back projection units 280, each for processing and locating the data for all pixels of the image for a single view. Each unit includes a two port memory 282 for holding the data of a view of the subset. The memories 282 are sequentially enabled to receive data for the corresponding set of views comprising the subset. An address locator 284 for each of the memories is provided for locating the appropriate view data point for each value in the subset image in the memory 122. The locator 284 provides the appropriate coordinate transformation based on the relative view angle between the X-Y and X'-Y' coordinate systems. As shown the locator includes an address generator having a coefficient memory 286 and an accumulator 288. The address generator is one dimensional since the data stored in memory 282 is one dimensional (each value represents the sum of the data for a corresponding band 50). The output of the locator 284 is applied to one input of the memory address multiplexor 290, the other input receiving the Y address signal from the control of the receiver 114 (selecting the stored view). By controlling the address, the proper located data value stored in the memory can be provided as one input to the summers 300, which in turn provide a summed signal in the register 302. The value in the register 302 will be the sum of all of the contributions for each final pixel of a subset of views. The output of the register is provided to the subset view memories 122, shown in detail in Fig. 6D.

As shown in Fig. 6D, a plurality of memories are provided. Preferably, there are N+1 subset memories, where N represents the number of subsets per frame. Data is read into the memories sequentially so that a memory is filled with the data of a subset before the next subset of data is entered into the next memory. Thus, if desired, one memory can be loaded while N memories are being read out and summed to form an image defined by a frame. In this regard the one memory still being filled will have its output forced to zero so that the output of the memory will have no effect on the signal summation. Multiplexors 310 are used to control the input address, when the memory is in the write mode so the memory receives data from the register 302, and the output address, when the memory is in the read mode so that all the memories read out a subset image simultaneously. The input address signal to the multiplexor, as well as the select control for each multiplexor are provided from the controller of the receiver 114, while the output address signal is provided from a video timer 320. The data of the N of the memories are read out appropriately in TV image format to the means 124 for summing the subsets of data. The means 124 includes summers 312 for summing all the values for each pixel location. The summed values are provided to the register 314. While the output of register 314 can be used to display the image on a display matrix of pixels, as shown in Fig. 6D the output of register 314 is converted to an analog signal by the video digital to analog converter 322 of the display data output 126. The vertical and horizontal sync signals are applied to the video output of the converter 322 by the timer 320. The analog video signal is applied to a video monitor 128 for displaying the reconstructed image in analog form.

When a subset of data is completely read out of the memories 122, the memories are used to store the next subset of data.

It should be evident that alternatives to subset memories 122 include, for example, two port memories and fading algorithms.

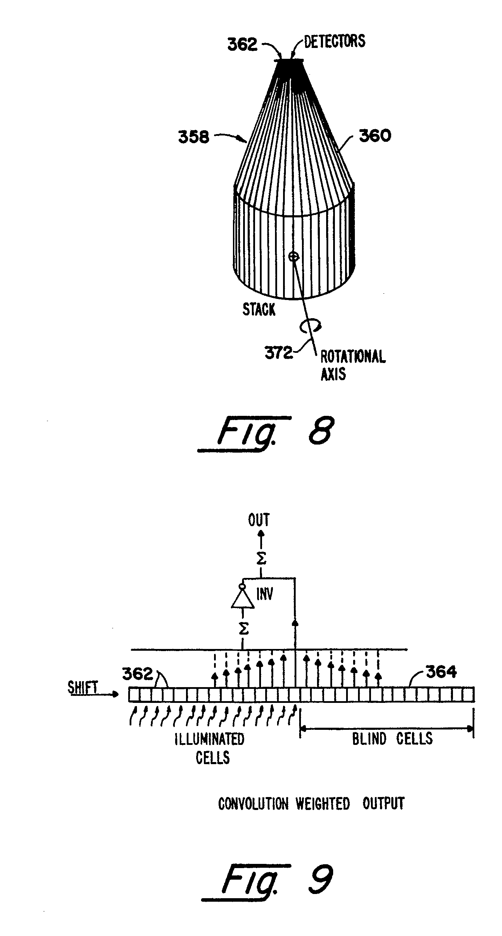

Referring to Figs. 7-9, an image data source is shown in the form of a camera 350 adapted to optically integrate the intensity values for each band 50 for each view and to mechanically rotate the image field relative to the image field for each view. More specifically, the camera includes means, in the form of an objective lens 352 for forming an image of an object 354 in the image plane 356. The image field 30 is therefore defined by the plane 356. An optical data collector 358 includes a front face forming the projection plane containing the projection field 70 coplanar with the image plane 356. The collector 358 includes individual light pipe elements 360 (shown in Fig. 8) for collecting the intensity values contained within the corresponding band 50 of each view. The elements 360 are tapered so that the cross-sectional shape of the elements are larger where the light enters the elements then at the other end. Each element has a cross-sectional shape of the band at the end where light enters. The elements are light transmissive, with the sides completely surrounded by cladding or light reflective material so that light entering the front face of each element is reflected and concentrated at the rear face. Each element has a light detector 362 for converting the integrated intensity value reaching the detector to an electrical signal representative of the value. The detectors can be semiconductor devices in the form of charge coupled devices (CCDs). The actual cells receiving radiation can be combined with additional blind cells, as shown in Fig. 9, together with a shift register with weighted outputs so that the values converted by the cells and register are properly weighted and convolved with a kernel at the output of the device.

Referring to Fig. 7, the optical data collector can be rotated relative to the image plane 356 by suitable means, such as a stepping motor 370 for rotating the optical data collector 360 relative to the image plane by the angles $I$, $I_s$ and/or $I_v$. The angle can be measured by a shaft encoder 374. In this regard the axis of rotation 372 will be coaxial with the optical axis defined by the image plane, and will extend through the origin of and will be normal to the X-Y and X'-Y' coordinate systems of the image and projection fields.

The system shown in Figs. 7-9 can be extended by an optical system to simultaneously illuminate a multiplicity of detectors, each with a different projection angle.

The camera shown and described in Figs. 7-9, will produce analog data from the individuals detectors 262 or 282, which can be applied to an ADC such as the one shown 146 in Fig. 6A. The signals would require little or no processing since they will be in coded form. These signals can easily be back projected on a display device, such as a cathode ray tube, designed to display back projected data onto a display screen in a manner synchronized to how the data is collected by the camera so that the image can be recreated.

More particularly, as shown in Fig. 10, a cathode ray tube (CRT) 400 can be used to display the reconstructed image. The CRT includes a sealed envelope 402 having a neck portion 404 and a enlarged portion 406. A coating 420 of an electroluminescent material is provided on the inside surface of the enlarged portion 402 of the CRT, opposite the neck portion 404. The coating can be of a phosphor which provides a predetermined decay time so that old data will fade as new data is displayed. Alternatively, coating 420 can form a persistent phosphor screen for holding the pictorial information for longer periods of time. An electron gun 408 for providing a variable electron beam and a yoke 410, for controlling the direction of the beam are suitably mounted in support 412 in the neck portion 404 so as to rotate about the axis 414. The support 412 together with the gun 408 and yoke 410 are rotated about the axis 414 with a motor 416. The angular position of the gun and yoke relative to the envelope, and in particular the coating 420, is determined by a shaft encoder 418. The CRT 400 is particularly useful with the camera 350 of Fig. 7, since the output of the shaft encoder 374 acquired during the coding operation for each view, can be used at the position data input 430 of the CRT for controlling the motor 416 to move the angular position of the gun and yoke to a proper angular orientation with respect to the coating 420 as measured by the encoder 418 so that the camera and CRT are synchronized. The coded data for each angular position is applied to the input 440, which in turn is applied to the gun 408 and yoke 410 for generating a variable electron beam in a manner well known in the art. In order to control the image intensity a brightness control 442 can be provided and operated in a well known manner.

Further, when back projecting the pictorial information for each of the views a variable bias based on negative peaks (for example, as determined by a negative peak detector and provided by a bias control) can be used so that all of the intensity values displayed will be of a positive value.

The foregoing provide an improved system for and process of coding the pictorial information of an image in such a manner that it can easily be transmitted through a bandwidth limited transmission medium, and/or stored in a storage device of limited storage capacity. The camera system described in Figs. 7-9, provide a simple and inexpensive way to generate the coded data in accordance with the present invention.

Since certain changes may be made in the above processes and apparatus without departing from the scope of the invention herein involved, it is intended that all matter contained in the above description or shown in the accompanying drawing shall be interpreted in an illustrative and not in a limiting sense.

## Claims

1. A system for coding and subsequently reconstructing pictorial information contained in a previously formed image, said system comprising:
   means for sensing the pictorial information of said image from each of a plurality of different perspective views of said image so as to generate data representative of said pictorial information; and
   means for processing said data that said image can be reconstructed by back projecting said pictorial information.

2. A system according to claim 1, further including means for forming said image.

3. A system according to claim 1, wherein said means for processing said data includes means for convolving at least a portion of said data.

4. A system according to claim 3, wherein said means for convolving at least a portion of said data includes means for processing said portion of said data with a deblurring kernel.

5. A system according to claim 1, wherein said means for processing said data includes means for compressing said data.

6. A system according to claim 1, wherein said means for sensing includes means for sensing said pictorial information along a plurality of parallel projections from each of said plurality of different perspective views of said image so that said data represents the pictorial information contained in parallel contiguous bands comprising said image with respect to each of said perspective views.

7. A system according to claim 6, wherein said means for sensing said pictorial information from each of said perspective views includes means for integrating the pictorial information contained in each of said bands of each of said perspective views.

8. A system according to claim 7, wherein said means for integrating the information contained in each of said bands includes means for optically sensing all the pictorial information contained in each of said bands of each of said views and electrically generating said data as a function of the total optical summation of pictorial information contained in each of said bands.

9. A system according to claim 6, wherein said means for sensing said pictorial information from each of said perspective views includes means for summing the pictorial information contained in a plurality of pixel elements comprising each of said bands of each of said perspective views.

10. A system according to claim 9, wherein said means for summing the information contained in the pixel elements of each of said bands includes means for generating data representing pictorial information contained in each of said plurality of pixels of each of said bands for each of said views, and means for summing said data for each of said bands.

11. A system according to claim 6, wherein said means for sensing includes means for rotating the orientation of said bands relative to said image so as to establish each of said perspective views.

12. A system according to claim 11, wherein said means for rotating the orientation of said bands is sequentially repeated for a set of plurality of said perspective views so that said system operates continuously.

13. A system according to claim 12, wherein said means for rotating the orientation of said bands includes means for rotating said bands by an angle $I_v$ for a total of n views before repeating said step of rotation, wherein:

$$I_v = 180r/n;$$

wherein $I_v$
= the angular increment between each view;

n
= the total number of views per frame before repeating the views; and

r
= a whole integer representing the total number of $360°$ rotations of the projection field relative to the image field per frame and chosen to have no common factor with n, except unity.

14. A system according to claim 11, wherein said means for rotating the orientation of said bands includes means for rotating said bands relative to said image in angular increments of $180°/n$, wherein n is a whole integer.

15. A system according to claim 11, wherein said means for rotating the orientation of said bands includes means for sensing the data from each of a plurality of subsets, each of said subsets comprising a different plurality of views so as to provide data for a frame of said image, wherein said means for sensing the data from each of said plurality of subsets comprises means for rotating said bands about said image axis in equal angular increments so as to generate each subset of data representative of a subset of views of said image, and means for rotating said bands relative to said image by an angular offset angle, $I_s$, between each step of rotating said bands so as to generate each of said subsets of data, wherein: $I_s$ = (i) $(180°)/(s)$ (r)

wherein $I_s$ = the offset angle between each subset;

r = the number of views per subset;

s = the total number of subsets in a frame; and

i = a whole integer chosen to be the lowest number which has no common factor with s except unity.

16. A system according to claim 11, wherein said means for rotating said bands about said image axis includes means for rotating said bands about said image axis so as to generate a plurality of subsets of data, each representative of a different subset of views of said image.

17. A system according to claim 1, wherein said plurality of perspective views represents a set of views of said image, and said system further includes means for repeatedly sensing the pictorial information of said image from a plurality of said sets of views so as to generate data representative of said image substantially in real time.

18. A system according to claim 17, further including means for replacing data representative of the pictorial information contained in each band for each view for each set of views with the data representative of the pictorial information contained in the corresponding band of the corresponding view of the next succeeding set of views.

19. A system according to claim 17, further including means for determining the difference between the data representative of the pictorial information contained in each band for each view for each set of views and the data representative of the pictorial information contained in the corresponding band of the corresponding view of the next succeeding sensed set of views, and updating the data with respect to each of said bands for each of said views of the set of views in which a difference is determined.

20. A system according to claim 1, further including means for sensing the pictorial information of said image from each of a plurality of different perspective views of said image so as to generate additional data representative of the luminosity of said pictorial information and a pair of two color differences of said pictorial information so that said data can be subsequently used to back project said pictorial information so as to substantially reconstruct said image in color.

21. A system according to claim 1, further including means for sensing said image from each of a plurality of different perspective views of said image so as to generate additional data representative of each of three primary or complementary colors of said pictorial information so that said data can be subsequently used to back project said pictorial information so as to substantially reconstruct said image in color.

22. A system according to claim 6, wherein said means for sensing includes means for rotating the orientation of said bands relative to said image so as to establish each of said perspective views, and said means for processing said data includes means for transforming said data in accordance with an X-Y transformation function.

23. A system according to claim 22, wherein said means for rotating the orientation of said bands includes means for incrementally rotating said bands relative to said image about a predetermined image axis through said image at a preselected incrementing angle so that said X-Y transformation function is a function of said incrementing angle.

24. A system according to claim 22, wherein said means for rotating the orientation of said bands includes means for incrementally rotating said bands about said image axis in angular increments of $180°/n$ so that said X-Y function is a function of $180°/n$, wherein n is a whole integer.

25. A system according to claim 22, wherein said means for rotating the orientation of said bands includes means for rotating said bands relative to said image in angular increments for each of a plurality of different subsets of views, and means for rotating said bands relative to said image by an offset angle $I_s$ between each of said subsets of views, wherein $I_s = (i)(180°)/(s)(r)$

wherein $I_s$ = the offset angle between each subset;

r = the number of views per subset;

s = the total number of subsets in a frame; and

i = a whole integer chosen to be the lowest number which has no common factor with s except unity.

and said X-Y transformation function is a function of said equal angular increments and said offset angle $I_s$.

26. A system according to claim 22, wherein said means for rotating said bands about said image axis includes means for rotating said bands relative to said image so as to generate a plurality of subsets of data, each representative of a different subset of views of said image.

27. A system according to claim 26, wherein said means for processing said data includes means for processing said data for each of said subsets so as to sequentially back project said image from each of said subsets of views so as to reconstruct said image.

28. A system according to claim 27, wherein said means for processing said data includes means for modifying said data for each of said subsets so that as the pictorial information of each of said views of each of said subsets are back projected the intensity of said pictorial information is adjusted so that the relative intensity of the image remains substantially unchanged as said pictorial information is back projected.

29. A system according to claim 1, wherein said plurality of perspective views represents a set of views of said image, and said system further includes means for repeatedly sensing the pictorial information of said image from a plurality of said sets of views so as to generate data representative of said image substantially in real time, and means for updating each set of data representative of a complete set of views as a function of the corresponding set of data representative of the image from the next succeeding set of views.

30. A system according to claim 29, further including means for replacing data representative of the pictorial information contained in each band for each view for each set of views with the data representative of the pictorial information contained in the corresponding band of the corresponding view of the next succeeding set of views.

31. A system according to claim 29, further including means for determining the difference between the data representative of the pictorial information contained in each band for each view for each set of views and the data representative of the pictorial information contained in the corresponding band of the corresponding view of the next succeeding set of views, and means for updating the data with respect to each of said bands for each of said views of the set of views in which a difference is determined.

32. A system according to claim 29, wherein said means for processing said data further includes means for generating interpolation data as a function of the difference between the data of two adjacent bands and the position of a pixel element used to create a pixel of the back projected image.

33. A system according to claim 1, said system further including means for sensing the pictorial information of said image from each of a plurality of different perspective views of said image so as to generate additional data representative of the luminosity of said pictorial information and the hue of said pictorial information so that said data can be subsequently used to back project said pictorial information so as to substantially reconstruct said image in color.

34. A system according to claim 1, said system further including means for sensing the pictorial information of said image from each of a plurality of different perspective views of said image so as to generate additional data representative of the luminosity of said pictorial information and a pair of two color differences of said pictorial information so that said data can be subsequently used to back project said pictorial information so as to substantially reconstruct said image in color.

35. A system according to claim 1, said system further including means for sensing the pictorial information of said image from each of a plurality of different perspective views of said image so as to generate additional data representative of each of three primary or complementary colors of said pictorial information so that said data can be subsequently used to back project said pictorial information so as to substantially reconstruct said image in color.

36. A camera system for coding pictorial information contained in an image, said system comprising means for forming said image; the improvement characterized by:

said sensing means for sensing the pictorial information of said image along a plurality of parallel projections from each of a plurality of different perspective views of said image so as to generate data representative of said pictorial information contained in parallel contiguous bands comprising said image with respect to each of said perspective views so that said data can be subsequently processed and used to back project said pictorial information so as to substantially reconstruct said image, wherein said sensing means comprises:

a plurality of sensors for sensing said information and arranged so as to provide at least one sensor for each of said bands;

means for transmitting said pictorial information in each of said bands for each of said views to the corresponding ones of said sensors; and

means for rotating at least a portion of said sensing means relative to said image so as to rotate the orientation of said bands relative to said image so as to establish each of said perspective views.

37. A system according to claim 36, wherein said means for forming said image includes means for forming said image in an image plane, and said means for transmitting said pictorial information includes light pipe means for separately transmitting said pictorial information for each of said bands, said light pipe means having one end positioned relative to said image plane for separately receiving said pictorial information for each of said bands and the opposite end positioned relative to said plurality of sensors so that said sensors receive the pictorial information contained in the corresponding band.

38. A system according to claim 37, wherein said plurality of sensors are arranged in an array.

39. A system according to claim 38, wherein said array includes one sensor for sensing the entire pictorial information of each of said bands for each of said views so that each said sensor integrates the pictorial information in the corresponding band of each of said views.

40. A system according to claim 39, wherein said light pipe means includes optical elements shaped so as to concentrate all of said pictorial information within each of said bands of each of said views onto the corresponding one of said sensors of said array.

41. A system according to claim 40, wherein said optical elements are tapered so that the cross-dimensional shape of said elements is smaller at said opposite end than at said one end.

42. A system according to claim 37, wherein said means for rotating includes means for rotating at least said one end of said light pipe means relative to the image plane.

43. A system according to claim 42, wherein said means for rotating includes means for rotating said light pipe and said plurality of sensors relative to said image plane.

44. A system according to claim 43, wherein said means for rotating said one end of said light pipe means relative to said image plane includes means for incrementally rotating said one end relative to said image about a predetermined image axis through said image plane.

45. A system according to claim 37, wherein said sensing means further includes convolver means for convolving said data representative of said pictorial information of said image.

46. A system according to claim 45, wherein said sensing means includes a plurality of sensors for generating data representative of said pictorial information, and convolver means integrally formed with said sensors for for weighting said data.

47. A system according to claim 46, wherein each of said plurality of sensors is a semi-conductive element.

48. A system according to claim 47, wherein each of said sensors is a CCD cell.

49. A system according to claim 46, wherein convolver means include shift register means coupled to said sensors for convolving the output of said sensors.

50. A system for coding, transmitting and reconstructing an image, said system comprising:
(1) a image information coder including:
(a) means for forming said image;
(b) sensing means for sensing the pictorial information of said image along a plurality of parallel projections from each of a plurality of different perspective views of said image so as to generate data representative of said pictorial information contained in parallel contiguous bands of pixel elements comprising said image with respect to each of said perspective views;
(c) means for rotating at least a portion of said sensing means relative to said image so as to rotate the orientation of said bands relative to said image so as to establish each of said perspective views; and
(d) means for transmitting said data; and
(2) an image receiver, responsive to said data, for reconstructing said image, said receiver comprising:
(a) means for back projecting said pictorial information for each of said views; and
(b) means, responsive to said means for back projecting, for displaying said back projected image.

51. A system according to claim 50, wherein said image receiver is a cathode ray tube including means for generating a variable electron beam and a yoke for controlling the direction of said beam and a screen for displaying said pictorial information in response to said beam, wherein the intensity and direction of said beam is a function of said data representative of pictorial information.

52. A system according to claim 51, wherein said cathode ray tube includes means for rotating said pictorial information relative to said screen as a function of the amount said portion of said sensing means is rotated relative to said image so as to reconstruct said image from each of said perspective views.

53. A system according to claim 52, wherein said means for rotating said pictorial information relative to said screen includes means for rotating said yoke relative to said screen.

54. A system according to claim 53, wherein said means for rotating at least a portion of said sensing means relative to said image of said coder and said means for rotating said yoke are synchronized.

**55.** A system according to claim 50, wherein said screen is a persistent phosphor screen.

**56.** A system according to claim 50, further including means for convolving said data so as to deblur said reconstructed image.

**57.** A system according to claim 56, wherein said means for back projecting said pictorial information for each of said views includes means for generating a variable bias so as to eliminate negative values in said convolved data.

**58.** A system according to claim 57, wherein said receiver further includes operator controlled means for adjusting the brightness of said image on said screen.

**59.** A system according to claim 50, wherein said receiver is a cathode ray tube.

**60.** A system according to claim 50, wherein said sensing means repetitively senses the pictorial information of said image along a plurality of parallel projections from a set of perspective views comprising a plurality of different subsets of said perspective views, said means for transmitting includes means for sequentially transmitting said data for each of said subsets to said receiver.

**61.** A system according to claim 60, wherein said means for displaying said back projected image further includes means for holding a predetermined number of back projected images for a preselected time period so as to define a frame of said displayed image.

**62.** A CRT system for reconstructing an image coded by sensing the pictorial information of an image along a plurality of parallel projections from each of a plurality of different perspective views of said image so as to generate data representative of said pictorial information contained in parallel contiguous bands of pixel elements comprising said image with respect to each of said perspective views and rotating at least a portion of said sensing means relative to said image so as to rotate the orientation of said bands relative to said image so as to establish each of said perspective views; said system being of the type comprising means for generating a variable electron beam and a screen for displaying said pictorial information in response to said beam, said system further comprising:

means, including means for rotating said means for generating said variable electron beam relative to said screen, for back projecting said pictorial information for each of said views.

_Fig._ 1

_Fig._ 2A

*Fig. 2B*

*Fig. 2C*

_Fig. 3_

Fig. 4

EP 0 429 778 A2

```
                                                    ┌──────────┐
                                                    │ OPTIONAL │╮106
                                                    │ STORAGE  │
                                                    └──────────┘
 ┌──────────┐    ┌──────────┐   ┌──────────┐    ┌──────────┐   ┌──────────┐
 │IMAGE DATA│╮100│ OPTIONAL │╮102│PROJECTOR │╮104│ OPTIONAL │╮108│TRANSMITTER│╮110
 │ SOURCE   │───▶│ FILTER   │──▶│ SYSTEM   │──▶│DATA COMP.│──▶│          │
 └──────────┘    └──────────┘   └──────────┘    └──────────┘   └──────────┘

                            ┌──────────────┐╮112
                            │ TRANSMISSION │
                            │   MEDIUM     │
                            └──────────────┘

┌─────────┐   ┌─────────┐   ┌───────────┐   ┌─────────┐   ┌─────────┐   ┌─────────┐   ┌─────────┐   ┌─────────┐
│RECEIVER │╮114│OPTIONAL │╮116│OPT. VIEW │╮118│ BACK    │╮120│ SUBSET  │╮122│ SUBSET  │╮124│DISPLAY  │╮126│DISPLAY  │╮128
│         │──▶│DATA EXP.│──▶│INTERPOLATOR│──▶│PROJECTOR│──▶│VIEW MEMS.│──▶│SUMMATION│──▶│DATA OUT │──▶│         │
└─────────┘   └─────────┘   └───────────┘   └─────────┘   └─────────┘   └─────────┘   └─────────┘   └─────────┘
```

## _Fig_ 5

Fig. 6A

Fig. 6B

MULTIPLE PROJECTOR SYSTEMS
104

Fig. 6C

VIEW INTERPOLATOR 118

MULTIPLE SINGLE VIEW BACK PROJECTORS 120

EP 0 429 778 A2

Fig. 6D

_Fig. 7_

EP 0 429 778 A2

362 ─ ↗ DETECTORS

358 ↗        360

STACK

372 ─ ROTATIONAL AXIS

## _Fig. 8_

OUT
↑
Σ
│
◁ INV
│
Σ

362 ↗        364

SHIFT →

ILLUMINATED CELLS          BLIND CELLS

CONVOLUTION WEIGHTED OUTPUT

## _Fig. 9_

_Fig. 10_